(19) Europäisches Patentamt
European Patent Office
Office européen des brevets

(11) Numéro de publication: **0 252 795 B1**

# (12) FASCICULE DE BREVET EUROPEEN

(45) Date de publication de fascicule du brevet: **22.05.91**

(51) Int. Cl.5: **C09J 163/02**, C09J 121/00, C08L 63/02, C08L 21/00

(21) Numéro de dépôt: **87401405.3**

(22) Date de dépôt: **22.06.87**

## (54) Systèmes pour adhésifs thermofusibles réticulables, leur préparation et procédé de collage correspondant.

(30) Priorité: **27.06.86 FR 8609391**

(43) Date de publication de la demande: **13.01.88 Bulletin 88/02**

(45) Mention de la délivrance du brevet: **22.05.91 Bulletin 91/21**

(84) Etats contractants désignés: **AT BE CH DE ES FR GB GR IT LI LU NL SE**

(56) Documents cités:
**US-A- 3 100 160**
**US-A- 3 639 500**

**PATENT ABSTRACTS OF JAPAN, vol. 5, no. 62 (C-52)[734], 25 avril 1981; & JP-A-56 14 572 (SEIKISUI KAGAKU KOGYO K.K.) 12-02-1981**

**CHEMICAL ABSTRACTS, vol. 82, no. 20, 19 mai 1975, page 47, résumé no. 126222k, Columbus, Ohio, US; & JP-A-74 96 088 (SHOWA ELECTRIC WIRE AND CABLE CO., LTD) 11-09-1974**

(73) Titulaire: **NORSOLOR S.A.**
**Tour Aurore Place des Reflets**
**F-92080 Paris la Défense Cédex 5(FR)**

(72) Inventeur: **Sorg, Kurt**
**21, Bulle Eglantine**
**F-95610 Eragny(FR)**

(74) Mandataire: **Chaillot, Geneviève**
**Cabinet CHAILLOT 21, avenue Louise de Bettignies**
**F-92700 Colombes(FR)**

**EP 0 252 795 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne des systèmes pour des adhésifs thermofusibles qui ont la particularité de conduire, après application sur les surfaces à encoller, à un produit réticulé de manière sensiblement irréversible le rendant infusible ou difficilement fusible. Elle concerne également la préparation de ces systèmes, ainsi que le procédé de collage correspondant .

Les systèmes pour adhésifs thermofusibles réticulables conformes à la présente invention possèdent le double avantage de pouvoir être mis en oeuvre de façon très aisée dans des installations industrielles, notamment des installations automatisées (robots), telles que celles de l'industrie automobile, et de pouvoir être appliqués à de nombreux types d'objets réalisés à partir de matériaux très divers, tels que le bois, les métaux, les textiles tissés ou non-tissés, le verre, la porcelaine, les céramiques, le carton, le papier, la pierre, le béton et les matières plastiques. Ils présentent notamment un excellent pouvoir d'adhésion vis-à-vis des substrats fermés non poreux, tels que le polystyrène, le polyéthlylène non traité, le poly(chlorure de vinyle) non traité, les caoutchoucs acrylonitrile-butadiène-styrène,le poly(méthacrylate de méthyle), le verre, les métaux, les papiers surfacés, pelliculés, recouverts d'une couche de vernis durcie par rayonnement ultra-violets. Ce large domaine d'application des adhésifs thermofusibles selon la présente invention mérite d'être souligné.

On mentionnera notamment l'utilisation particulièrement intéressante des systèmes selon l'invention pour le brochage des livres. Dans ce domaine, les procédés de collage connus à ce jour sont :

(1) le collage à l'aide d'une dispersion aqueuse en un ou plusieurs passages ;

(2) le collage, en un ou deux passages, à l'aide d'une colle thermofusible traditionnelle, c'est-à-dire d'une composition solide à la température ambiante qui, après fusion, durcit par refroidissement ;

(3) le collage mixte, avec un passage de colle vinylique et un passage de colle thermofusible ; et

(4) le collage à l'aide d'une colle thermofusible polyuréthanne.

La technique (1) nécessite un temps de séchage long ; la technique (2) conduit, dans le cas d'un seul passage, à une tenue à l'arrachage des pages, à une tenue au froid et à une tenue au chaud relativement limitées, et, dans le cas d'un deuxième passage, à une faible adhérence de la seconde couche sur la première ; la technique (3) présente l'inconvénient de la longueur du temps de séchage de la colle vinylique,laquelle, si elle n'est pas bien sèche - ce qui est difficile à contrôler sur machine - risque de ne pas bien accrocher sur la colle thermofusible ; quant à la technique (4), elle présente l'inconvénient que les colles thermofusibles polyuréthanne restent poisseuses tant que la réticulation n'est pas terminée, si bien que, pendant toute cette période, on ne peut pas réaliser le massicotage des livres sans risquer un encrassement ; par ailleurs, les colles thermofusibles polyuréthanne nécessitent un apport d'eau pour réticuler, ce qui n'est pas facile à apporter avec des couvertures de livres pelliculées et des papiers couchés fermés. Avec les compositions selon la présente invention, les inconvénients précités sont surmontés.

Les systèmes pour adhésifs selon la présente invention sont des systèmes à deux composants, (ci-après appelés A et B), l'un renfermant notamment des groupes anhydride, et l'autre renfermant notamment des groupes susceptibles de réagir avec ces derniers, une fois les cycles anhydride ouverts. Ces composants peuvent, chacun de leur côté, être fondus et tenus en fusion pendant des temps relativement longs (d'au minimun 8 heures) compatibles avec les exigences d'une mise en oeuvre à l'échelle industrielle, refroidis et refondus sans provoquer de réticulation. Au moment de l'emploi, ces deux composants sont mis en contact à l'état fondu (mélange intime ou superposition d'une couche de l'un sur une couche de l'autre), et la réticulation attendue se produit alors sous l'effet d'une élévation de la température.

Ce mécanisme de la réticulation entre les groupes anhydride ouverts et les autres groupes réactifs est connu en tant que tel, mais il n'avait jamais été appliqué aux collages industriels. Ainsi, dans la demande de brevet français N° 2 554 112, on décrit l'application à l'enduction d'un substrat d'une composition comprenant un polymère de l'éthylène et de l'anhydride maléique, un composé polyépoxydique et un catalyseur de réaction entre les fonctions anhydride et époxyde, et on mentionne l'utilisation de cette composition comme adhésif thermofusible. La réticulation commence dès que l'on mélange les ingrédients et se poursuit alors de façon progressive. Ce procédé ne peut pas être utilisé à grande échelle, du fait qu'il nécessite pratiquement que le mélange soit effectué directement sur la machine appliquant la colle, ce qui ne peut pas être valablement pratiqué dans des installations industrielles.

Dans le domaine du brochage, les systèmes selon l'invention n'ont pas besoin d'apport d'agents extérieurs pour réticuler, les composants A et B renfermant tous les ingrédients. Les livres sont massicotables immédiatement comme dans le cas des colles thermofusibles classiques. Les deux couches, constituées chacune d'un composant précité à l'état fondu, réagissent chimiquement à leur surface de

contact, n'entraînant aucun risque de décollage à cet endroit. Les livres ainsi brochés ont une très bonne tenue au froid et l'on peut, selon les formulations, obtenir un dos dur ou un dos très souple.

On mentionnera un autre avantage des constituants des systèmes selon la présente invention qui est celui d'être thixotropes dans le cas où on y incorpore un ingrédient défini. Cet avantage est intéressant dans un certain nombre de domaines, notamment dans le bâtiment, la construction, etc.. Les colles non thixotropes ont tendance à couler lorsqu'elles sont projetées sur un plafond. Les colles thixotropes figent beaucoup plus rapidement par changement de viscosité dès que la contrainte du mouvement propulseur s'arrête. La colle ainsi appliquée épaissit instantanément tout en restant pâteuse, et elle garde, par conséquent, son temps ouvert. Il en résulte les avantages d'un travail propre, sans projections sur les personnes, ne conduisant pas à l'encrassement des robots, etc..

La présente invention a donc d'abord pour objet un système bi-composants pour adhésif thermofusible réticulable, présentant les propriétés sus-indiquées, qui est caractérisé par le fait qu'il comporte ;

- un premier composant ne renfermant pas de groupes anhydride et obtenu par mélange des constituants de la composition (A) suivante à une température suffisante pour conduire à un liquide homogène :
  a) au moins un polymère choisi parmi les polymères thermoélastiques et les caoutchoucs de synthèse;
  b) au moins un composé renfermant au moins un groupement susceptible de réagir avec des groupes anhydride,
  c) au moins une résine tackifiante ; et
  d) le cas échéant, au moins un plastifiant ;
- un second composant obtenu de la même façon que le premier mais de façon séparée à partir des constituants de la composition (B) suivante :
  a) au moins un polymère choisi parmi les polymères thermoélastiques et les caoutchoucs de synthèse ;
  b) au moins un composé renfermant au moins un groupe anhydride ;
  c) au moins une résine tackifiante ; et
  d) le cas échéant, au moins un plastifiant ; et

au moins un activateur (C) de la réaction entre les groupements réactifs du constituant (Ab) et les fonctions anhydride du constituant (Bb) étant incorporé dans le composant (A) et/ou dans le composant (B).

De préférence, le rapport molaire des groupements réactifs du constituant (Ab) aux groupes anhydride du constituant (Bb) est au moins égal à 1, et le rapport molaire de l'activateur (C) aux groupes anhydride du constituant (Bb) est au moins égal à 0,5 , de préférence, au moins égal à 1.

Les polymères thermoélastiques entrant dans la définition des constituants (Aa) et (Ba) sont choisis, de préférence, dans le groupe formé par les copolymères alcène en $C_2$-$C_{12}$/(méth)acrylate d'alkyle en $C_1$-$C_{12}$ et les polymères du norbornène et/ou de ses dérivés.

Quant aux caoutchoucs de synthèse entrant dans la définition des constituants (Aa) et (Ba), ils sont choisis, de préférence, parmi les copolymères à blocs styrène-diène-styrène, les diènes étant le butadiène, l'isoprène, etc.

Conformément à un premier mode de réalisation du système bi-composants pour adhésif thermofusible selon l'invention, le composé (Ab) renferme au moins un groupement époxyde.

Le composé (Ab) peut être alors un composé polyépoxydique de formule générale :

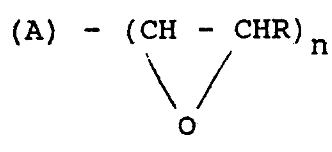

dans laquelle A est un groupe polyfonctionnel de valence n≧2 et R est un radical hydrocarboné ou un atome d'hydrogène. On peut citer, à titre d'exemples, les polyglycidyléthers de composés polyhydroxylés. Parmi ceux-ci, on choisit, soit les composés polyépoxydes de type aromatique (tels que ceux dérivés du Bisphénol A), soit les composés polyépoxydes de type aliphatique, particulièrement les polyglycidyléthers de polyalcools, tels que les diglycidyléthers des α-ω diols comme le diglycidyléther du butanediol, de l'hexanediol, du paracyclohexyldiméthanol, du néopentylglycol, tels que les triglycidyléthers de triols comme le triglycidyléther du triméthylolpropane, le triglycidyléther du glycérol, tels que les tétraglycidyléthers de tétrols comme le tétraglycidyléther du pentaérythritol. Parmi les composés provenant de l'époxydation de composés oléfiniques, on choisit avantageusement l'huile de soja époxydée.

On peut également utiliser, comme composé (Ab), un copolymère d'au moins une oléfine en $C_2$-$C_8$ avec au moins un monomère insaturé renfermant un groupement époxy, tel que notamment un acrylate ou méthacrylate de glycidyle. Un tel copolymère peut être obtenu, soit par greffage du monomère insaturé sur la chaîne de (co)polymère d'oléfine, soit directement par copolymérisation du monomère insaturé avec l'oléfine en $C_2$-$C_8$. Un tel copolymère peut en outre comprendre des motifs dérivés d'un autre monomère insaturé tel qu'un acrylate ou méthacrylate d'alkyle. De tels copolymères ont été décrits notamment dans le brevet US-A- 3 383 372.

Conformément à un deuxième mode de réalisation du système bi-composants pour adhésif thermofusible selon l'invention, le composé (Ab) renferme au moins un groupement amine. A titre d'exemple d'un tel composé (Ab), on peut mentionner un polyamide à fonctions amine libres, auquel cas on peut signaler que le composant qui est formé à partir de la composition correspondante présente, de manière surprenante, un caractère thixotrope.

Des polyamides utilisables sont notamment des polyamides obtenus à partir de (a) 35 à 49,5% en mole d'acide gras dimère, (b) 0,5 à 15% en mole d'acide gras monomère d'une longueur de chaîne de 12 à 22 atomes de carbone, (c) 2 à 35% en mole de polyétheramine de formule générale : $H_2N - R_1 - O - (RO)_x - R_2 - NH_2$

dans laquelle x représente un nombre compris entre 8 et 80, en particulier, entre 8 et 40 ; $R_1$ et $R_2$ représentent des restes hydrocarbonés, identiques ou différents, aliphatiques et/ou cycloaliphatiques ; et R représente un reste hydrocarboné aliphatique éventuellement ramifié, possédant 1 à 6 atomes de carbone, et (d) 15 à 48% en mole de diamine aliphatique renfermant 2 à 40 atomes de carbone dans le squelette carboné, les acides gras dimères pouvant être remplacés jusqu'aux 2/3 par des acides dicarboxyliques aliphatiques possédant 4 à 12 atomes de carbone ; et des polyamides obtenus à partir de (a) 20 à 49,5% en mole d'acides gras dimères, (b) 0,5 à 15% en mole d'acides gras monomères d'une longueur de chaîne de 12 à 22 atomes de carbone ; et (c) jusqu'à 20 à 55% en mole d'une amine portant au moins deux groupes amino primaires et possédant 2 à 40 atomes de carbone dans le squelette carboné, les acides gras dimères pouvant être remplacés jusqu'aux 2/3 par des acides dicarboxyliques aliphatiques possédant 4 à 12 atomes de carbone. Ces polyamides présentent avantageusement des groupes terminaux acides, leur indice d'acide allant de 1 à 50, de préférence, de 2 à 30, en particulier de 4 à 12 ; ils peuvent aussi porter des groupes terminaux amino leur indice d'amine allant de 2 à 15, en particulier de 4 à 10.

Conformément à un troisième mode de réalisation du système bi-composants pour adhésif thermofusible selon l'invention, le composé (Ab) est porteur d'au moins une fonction choisie parmi alcool et thiol. On peut citer en particulier des diols, tels que l'éthylène glycol, le propylène glycol et leurs polymères. Le composé (Ab) peut également être porteur simultanément d'une fonction alcool et d'une fonction amine, comme par exemple l'éthanolamine.

Le composé (Bb) est notamment un polymère renfermant des groupes choisis parmi les groupes anhydride maléique, itaconique et phtalique, etc., en particulier maléique.

Ce polymère (Bb) peut également renfermer, outre des motifs dérivés d'un anhydride, des motifs dérivés d'au moins un alcène et, le cas échéant, des motifs dérivés d'au moins un comonomère, choisi notamment parmi les acrylates et méthacrylates d'alkyle en $C_1$-$C_{12}$. De tels copolymères peuvent être obtenus, soit par copolymérisation directe des monomères, soit par greffage de l'anhydride sur un homopolymère de l'alcène ou sur un copolymère des autres monomères (alcène; (méth)acrylate). Dans le cas de la copolymérisation directe, la teneur en anhydride du copolymère est généralement inférieure ou égale à 3% en mole. Dans le cas du greffage, la teneur en anhydride du copolymère pourra atteindre 20% en mole.

Les résines tackifiantes (Ac) et (Bc) sont choisies notamment parmi les polyterpènes, le cas échéant, foctionnalisés par des novolaques, les colophanes et esters de colophane, ainsi que leurs dérivés hydrogénés, ainsi que les résines de pétrole. Les résines de pétrole utilisables dans les systèmes selon l'invention sont des résines préparées à partir de fractions d'hydrocarbures provenant du craquage à la vapeur de naphtas, tels que, d'une part, des coupes aromatiques contenant au moins un monomère choisi parmi le styrène et ses dérivés, les vinyltoluènes et les alkylbenzènes et, d'autre part, des coupes aliphatiques contenant un monomère contenant de 5 à 6 atomes de carbone, tel que le cyclopentadiène et ses dérivés et le cyclohexadiène.

Les plastifiants (Ad) et (Bd) sont choisis notamment d'une part, parmi les huiles semi-aliphatiques, les polyisobutylènes de très bas poids moléculaire, et les huiles pétrolières aromatiques, naphténiques ou paraffiniques, les alkylbenzènes, et, d'autre part, les esters dérivés d'acides organiques saturés tels que les phtalates, adipates, sébacates et azélates d'alkyle. A titre d'exemples de ces derniers, on peut citer les phtalates de diéthyle, de dibutyle, de dicyclohexyle, de diéthylhexyle, de dioctyle, de didécyle, de

butyléthylhexyle, les adipates de dibutyle, de dioctyle, de diisooctyle, les sébacates de dibutyle, de dioctyle, de diiosooctyle, les azélates de dioctyle et de diisooctyle. On peut également mentionner, comme plastifiants (Ad) et (Bd), les copolymères éthylène - acétate de vinyle de très bas poids moléculaire (de l'ordre de 1000-1500), un exemple de tel copolymère étant celui renfermant 28% en poids d'acétate de vinyle.

L'activateur (C) est choisi notamment parmi les amines tertiaires, comme la diméthylparatoluidine,la diméthyllaurylamine, la N-butylmorpholine, la N,N-diméthylcyclohexylamine, la benzyldiméthylamine, la pyridine, la diméthylamino-4-pyridine, le méthyl-1-imidazole, la tétraméthyléthylènediamine, la tétraméthylguanidine, la tétraméthylhydrazine, la N,N-diméthylpipérazine, la N,N,N'N'-tétraméthyl-1,6-hexanediamine ; les phospines, comme la triphénylphosphine ; les halogénures d'aryl- ou alkyl-phosphonium, comme l'iodure d'éthyltriphénylhosphonium ; et les amides tertiaires d'acides gras, comme les amides tertiaires d'acides gras de soja. Les phosphines et les halogénures d'aryl- ou alkylphosphonium sont avantageusement utilisés dans le cas où le composé (Ab) choisi renferme au moins un groupement époxyde.

Par ailleurs, au moins l'une des compositions (A) et (B) peut renfermer jusqu'à 10 parties en poids, pour 100 parties en poids de ladite composition, d'au moins d'un adjuvant tel qu'une cire ou paraffine, comme la cire de polyéthylène.

De même, au moins l'une des compositions (A) et (B) peut renfermer jusqu'à 5 parties en poids, pour 100 parties en poids de ladite composition, d'au moins une charge minérale, choisie notamment parmi la silice, l'alumine, les silicates, aluminates et silicoaluminates minéraux et le talc.

Egalement, au moins l'une des compositions (A) et (B) peut renfermer jusqu'à 1 partie en poids, pour 100 parties en poids de ladite composition, d'au moins un antioxydant choisi notamment parmi le 2,6-ditertiobutylparacrésol, le bishydroxyanisol, le 2,2'-thiodiéthyl-bis-3-(3,5-ditertiobutyl-4-hydroxyphényl) propionate, le tétrakis(méthylène 3-(3', 5'-ditertiobutyl-4'-hydroxyphényl) propionate)méthane, le 2,4 bis-N-octylthio-6-(4-hydroxy 3,5-ditertiobutylanilino) 1,3,5-triazine, le ditertiobutyl-3,5 hydroxy-4 phényl-3 propionate et l'octadécyl-3,5-ditertiobutyl-4-hydroxyhydrocinnamate.

Conformément à un mode de réalisation particulier, le système bi-composants selon l'invention comprend en outre un film de matière thermoplastique chimiquement inerte visà-vis de chacun des deux composants et portant sur chacune de ses faces une couche de l'un desdits composants, de manière à former un film tricouche. Le film inerte sera constitué, par exemple, par du polyéthylène ou polypropylène ou encore par un copolymère éthylène/acrylate d'alkyle ou éthylène/acétate de vinyle.

La présente invention porte également sur un procédé de préparation d'un système bi-composants tel que défini ci-dessus, ce procédé étant caractérisé par le fait qu'on mélange séparément les constituants de la composition (A) et ceux de la composition (B) à une température suffisante pour obtenir des liquides homogènes, et qu'on refroidit chacun des deux mélanges liquides tout en incorporant l'activateur (C) à au moins une desdites compositions (A) et (B).

De préférence, on mélange les constituants de chaque composition (A) et (B) à une température qui est supérieure d'au moins 10° C au point de ramollissement de ladite composition, par exemple entre 120° C et 170° C. La température de la composition à laquelle on incorpore l'activateur (C) est notamment comprise entre 120° C et 170° C.

Dans le cas où le système bi-composants comprend en outre un film tricouche tel que défini ci-dessus, le procédé susindiqué comporte, après que l'on ait préparé ses deux composants, l'étape consistant à appliquer l'un d'eux sur une face dudit film et l'autre sur l'autre face. L'application d'un composant sur une face du film peut s'effectuer par coextrusion, ou par enduction, par exemple au rouleau ou au moyen d'une filière plate.

La présente invention a également pour objet un procédé de collage de deux objets, caractérisé par le fait que l'on porte à une température comprise entre 120° C et 220° C chacun des composants du système bi-composants, tel que défini ci-dessus, puis :

- soit on les mélange intimement à cette température, puis on applique l'adhésif thermofusible résultant sur au moins l'un des deux objets à encoller, et enfin on applique l'un des deux objets encollés contre l'autre,
- soit on applique séparément les deux composants soit l'un après l'autre sur l'un des deux objets à encoller, soit l'un sur un objet à encoller et l'autre, sur l'autre objet à encoller, puis on applique l'un contre l'autre lesdits objets.

Il est parfois souhaitable, après avoir appliqué les deux objets l'un contre l'autre, de chauffer l'assemblage pendant une durée suffisante pour achever la réticulation.

L'invention porte également sur un procédé de collage de deux objets à l'aide du système constitué par le film tricouche précité, ce procédé étant caractérisé par le fait qu'on assemble les deux objets au moyen du film tricouche, puis on porte l'ensemble à une température supérieure au point de fusion du film

thermoplastique inerte, et suffisante pour permettre la migration de l'un des composés (Ab) et Bb) vers l'autre, leur entrée en contact provoquant la réticulation du système.

Pour illustrer davantage l'objet de la présente invention, on va en décrire maintenant plusieurs exemples de réalisation. Dans ces exemples, sauf indication contraire, les pourcentages indiqués sont donnés en poids.

Les différents polymères de marque "LOTADER" commercialisés par la Société "CdF CHIMIE TERPOLYMERES", qui sont mis en oeuvre dans ces exemples, présentent les caractéristiques indiquées dans le Tableau I ci-dessous. Les polymères de cette série, ayant pour référence HX 8230 et HX 8280 sont des copolymères éthylène/acrylate de butyle, et ceux ayant pour référence HX 8210 et HX 8290 sont des terpolymères éthylène/anhydride maléique/acrylate d'éthyle.

**TABLEAU I**

| Référence LOTADER | HX 8210 | HX 8230 | HX 8280 | HX 8290 |
|---|---|---|---|---|
| I.F. (dg/min) | 200 | 20 | 175 | 70 |
| % A.M. | 1,1 | 0 | 0 | 1,2 |
| % Acryl. | 1,8 | 4,3 | 7,9 | 5,6 |

Dans ce Tableau,:

- I.F. désigne l'indice de fluidité du polymère, déterminé à 190°C sous 2,16 kg conformément à la norme ASTM D-1238.
- % A.M. et % Acryl, désignent respectivement les pourcentages molaires d'anhydride maléique et d'acrylate (d'éthyle ou de butyle selon le cas), la teneur molaire en éthylène dans ces polymères étant représentée par le complément à 100%/

Les anti-oxydants mis en oeuvre dans ces exemples sont :

- le ditertiobutyl-2,6 paracrésol ;
- le ditertiobutyl-3,5 hydroxy-4 phényl-3 propionate ;
- le ditertiobutyl-3,5 hydroxy-4 hydrocinnamate d'octadécyle
- le 2,2'-thiodiéthyl bis-3-(3,5-(ditertiobutyl 4-hydroxy-phényl) propionate
- le 2,4-bis-N-octylthio-6-(4-hydroxy 3,5-ditertiobutylanilino)-1,3,5-triazine ;

vendus par la Société "CIBA-GEIGY" sous les dénominations "IRGANOX" respectivement PS 800, 1010, 1076, 1035 et 565.

I - PREPARATION DE DIFFERENTS COMPOSANTS A ET B

On prépare les formulations a1 à a3 et b1 a b3 suivantes:

FORMULATION a1

- Polyisobutylène (plastifiant), vendu sous la dénomination "NAPVIS D-10" par la Société "BP"..... 5%
- Résine époxydique vendue sous la dénomination "EPIKOTE 828" par la Société "SHELL ".............10%
- Résine de pétrole aliphatique hydrogénée (coupe en $C_8$)(résine tackifiante), vendue sous la dénomination "ESCOREZ 5300" par la Société "ESSO"........................................ 44,2%
- " LOTADER HX 8230"................................ 25%
  "LOTADER HX 8280" ................................ 15%
- Ditertiobutyl-2,6 paracrésol (anti-oxydant). ...... 0,25%
- Ditertiobutyl-3,5 hydroxy-4 phényl-3 propionate (anti-oxydant)........................................ 0,25%
- Triphénylphosphine ..................... 0,3%

FORMULATION a2

- Huile aliphatique (plastifiant), vendue sous la dénomination "PRIMOL 352" par la Société "ESSO"... 22%
- Huile naphténique (plastifiant), vendue sous la dénomination "PIONIER"............................ 4,2%

- Polynorbornène sous forme de poudre, de poids moléculaire moyen 2.000.000, vendu sous la dénomination "NORSOREX F" par la "SOCIETE CHIMIQUE DES CHARBONNAGES" 1,8%
- Résine de pétrole aliphatique hydrogénée (coupe en $C_8$) (résine tackifiante), vendue sous la dénomination "ESCOREZ 5320" par la Société "ESSO" ........................................ 39,7%
- Résine époxydique, vendue sous la dénomination "EPIKOTE 828" par la Société "SHELL".............. 10%
- Caoutchouc styrène-butadiène-styrène, vendu sous la dénomination "CARIFLEX TR 1102" par la Société "SHELL"................................ 17%
- Caoutchouc styrène-isobutadiène-styrène, vendu sous la dénomination "CARIFLEX TR 1107" par la Société "SHELL"................................ 4%
- Ditertiobutyl-3,5 hydroxy-4 hydrocinnamate d'octadécyle (anti-oxydant)........................ 0,5%
- 2,2'-thiodiéthyl bis-3-3,5-(ditertiobutyl 4-hydroxy-phényl) propionate (anti-oxydant)........ 0,1%
- 2,4-bis-N-octylthio-6-(4-hydroxy 3,5-ditertiobutylanilino)-1,3,5-triazine (anti-oxydant).................................. 0,05%
- Ditertiobutyl-2,6 paracrésol (anti-oxydant)........ 0,35%
- Triphénylphosphine................................ 0,3%

FORMULATION a3

- Cire de polyéthylène, vendue sous la dénomination "EPOLENE C-16" par la Société "KODAK".............. 5%
- Cire de Fisher Tropsch, vendue sous la dénomination "SASOLWAX H-2" ..................... 6%
- Polyisobutylène (plastifiant), vendue sous la dénomination "NAPVIS D-200" par la Société "BP"........................................ 6%
- Résine tackifiante terpéne phénolique, vendue

sous la dénomination "URAVAR 75205" par la Société "DSM"................................ 19,7%
- Résine polyépoxydique, vendue sous la dénomination "EPIKOTE 828" par la Société "SHELL" ................................ 15%
- Résine de pétrole aliphatique (résine tackifiante), vendue sous la dénomination "ESCOREZ 5380" par la Société "ESSO"........... 19,5%
- "LOTADER HX 8230"................................ 7%
- "LOTADER HX 8280"................................ 20%
- Anti-oxydants................................ 0,5%
- Triphénylphosphine................................ 0,3%

FORMULATION b1

- Polyisobutylène (plastifiant), vendu sous la dénomination "NAPVIS D-10" par la Société "BP"................................ 5%
- Résine terpène phénolique (résine tackifiante), vendue sous la dénomination "DERTOPHENE T" par la Société "DRT"................................ 15%
- Colophane hydrogénée (tackifiant) présentant un indice d'acide d'environ 160, vendue sous la dénomination "FORAL AX" par la Société "HERCULES"................................ 16 %
- Polyalphaméthylstyrène (tackifiant), vendu sous la dénomination "URATAK 68520" par la Société "DSM" ................................ 19,5%
- "LOTADER HX 8290" ................................ 25%
- "LOTADER HX 8210" ................................ 15%
- Ditertiobutyl-2,6 paracrésol (anti-oxydant)....... 0,25%
- Ditertiobutyl-3,5 hydroxy-4 phényl-3 proponiate (anti-oxydant)................................ 0,25%
- Amines tertiaires d'acides gras de soja (activateur) ................................ 4%

FORMULATION b2

- Cire vendue sous la dénomination "MOBILWAX 145" par la Société "MOBIL" ............ 5%
- Résine de pétrole aliphatique hydrogénée (résine tackifiante), vendue sous la dénomination "ESCOREZ 5380" par la Société "ESSO"................................ 26%
- Polyalphaméthylstyrène (tackifiant), vendue sous la dénomination "URATAK 68520" par la Société "DSM" ................................ 20%
- Copolymère vendu sous la dénomination "ESCORENE MV 2514" par la Société "ESSO".......... 4,4%
- Polyamide présentant un indice d'amine de 9 et un indice d'acide inférieur à 1,vendu sous la dénomination "EURELON 2140" par la Société "SHERING"................................ 0,2%
- Polymère styrène-butadiène-styrène, vendu sous la dénomination "EUROPREN T163" par la Société "ENICHEM"............................. 5%
- Amines tertiaires d'acides gras de soja........... 3,6%
- "LOTADER HX 8210" ................................ 19,7%
- "LOTADER HX 8290"................................ 16%
- 2,2'-thiodiéthyl-bis-3-3,5-(ditertiobutyl 4-hydroxy-phényl) propionate (anti-oxydant)....... 0,2%
- Ditertiobutyl-2,6 paracrésol...................... 0,2%

FORMULATION b3

- Cire vendue sous la dénomination "MOBILWAX 145" par la Société "MOBIL"............. 4%
- Cire de polyéthylène, vendue sous la dénomination "EPOLENE C-16" par la Société "KODAK" ...................................... 3%
- Polyisobutylène (plastifiant), vendu sous la dénomination "NAPVIS D-200" par la Société

"BP" .......................................... 5%

- Résine tackifiante, vendue sous la dénomination "FORAL AX" par la Société "HERCULES" .......................................... 14%
- Résine de pétrole aliphatique vendue sous la dénomination "ESCOREZ ECR 327" par la Société "ESSO" .......................................... 7%
- Résine de pétrole aliphatique vendue sous la dénomination "ESCOREZ 4401" par la Société "ESSO" .......................................... 21,5%
- "LOTADER HX 8210" .......................................... 24%
- "LOTADER HX 8290" .......................................... 18%
- Ditertiobutyl-3,5 hydroxy-4 phényl-3 propionate (anti-oxydant) .......................................... 0,25%
- Ditertiobutyl-2,6 paracrésol (anti-oxydant) .......................................... 0,25%
- Diméthylparatoluidine .......................................... 1%

On Mélange les différents constituants de chacune d'entre elles, à une température de l'ordre de 150°C. Après refroidissement des mélanges liquides ainsi obtenus jusqu'à la température ambiante, on obtient les composants respectivement A1 à A3 et B1 à B3. Les caractéristiques de ces différents composants sont indiquées dans le Tableau II ci-après.

TABLEAU II : Caractéristiques des constituants A et B

| | A1 | A2 | A3 | B1 | B2 | B3 |
|---|---|---|---|---|---|---|
| Viscosité à 175°C (Centipoises) | 2250 | ≈2000 | 2750 | 4600 | 6750 | 3900 |
| Point de ramollissement (°C) | 93 | ≈82 | 95,5 | | 94 | 95 |
| Temps ouvert* (seconde) | 3,5 | nd | 5,5-6 | 3,5 | 3-4 | 4-4,5 |
| Charge à la rupture-50mm/minute (N) | nd | nd | nd | 50 | 45 | 35 |
| Allongement à la rupture (%) | nd | nd | nd | 285 | 260 | 220 |

*: Temps pendant lequel le composant, appliqué en couche mince sur la surface à encoller, garde son caractère adhésif; nd = non déterminé.

Le composant B2 présente la particularité surprenante d'être thixotrope, ainsi qu'il apparaît des sures de viscosité suivantes

Viscosité 10 tours/minute = 5950 cps
Viscosité 100 tours minute = 7400 cps

II-APPLICATION DE DIFFERENTS ADHESIFS CONSTITUES PAR DES ASSOCIATIONS D'UN COMPOSANT A ET D'UN COMPOSANT B.

EXEMPLE D'APPLICATION I: brochage.

Dans cet exemple, on met en jeu les composants A1 et B2, pour réaliser le brochage de volumes du type "annuaires téléphoniques", catalogues ou livres.

On fait passer au-dessus d'un premier bac d'une machine à brocher renfermant le composant A1 liquide, que l'on a porté à une température de 200° C, les assemblages de feuilles imprimées, de façon à réaliser le dépôt, sur la tranche, d'une mince couche de ce composant A1. Quelques secondes après, on recommence l'opération au-dessus d'un second bac recevant le composant B1 liquide que l'on a porté à une température de 180° C, afin de réaliser le dépôt ,sur la première couche précitée, d'une seconde couche formée de ce composant B1. Quelques secondes après, on vient apposer la couverture du volume,dont la face interne de la tranche vient s'appliquer contre la seconde couche d'adhésif précitée.

La solidité de ce brochage a été expérimentée, en comparaison avec un brochage réalisé à l'aide d'un adhésif thermofusible connu, suivant l'essai d'arrachage dans lequel on arrache une page du volume selon une direction perpendiculaire au plan de brochage et on mesure la force nécessaire (exprimée en Newton) pour effectuer cet arrachage. Les résultats sont consignés dans le Tableau III ci-après:

<u>TABLEAU III</u>: Résultats des essais d'arrachage d'une page.

| Type de papier | Adhésif thermofusible connu* | Adhésif thermofusible de l'exemple I | |
|---|---|---|---|
| TIEFDRUCK 100g (papier hélio) | 4,2 (3h)** | 5,1 (3h) | 6,6 (1 semaine) |
| LEXICOTHECK OFFSET | 4,2 (3h) | 6,2 (3h) | 6,7 ( 1 semaine) |
| REISEKATALOG HELIO | 2,1 (2h) | 4,3 (2h) | 5,0 (1 semaine) |
| THURGANISCHE BRÜCKEN | 1,5 (3h) | 3,8 (3h) | 4,8 (1 semaine) |

* "Techmomelt Q 3207" de la Société HENKEL

** Temps s'étant écoulé entre le brochage et l'essai.

On constate que la force nécessaire à l'arrachage d'une page est nettement plus élevée dans les cas du brochage avec l'adhésif selon l'invention.

Par ailleurs on observe que le volume broché avec l'adhésif selon l'invention n'en présente pas moins pour autant une bonne aptitude à s'ouvrir à plat ("lay flat").

EXEMPLE D'APPLICATION II: assemblage tôle grasse sur tôle grasse.

On mélange intimement les composants A2 et B3, qui ont, au préalable, été portés à une température de l'ordre de 150° C. Ce mélange est appliqué, en couche mince, sur une première tôle non dégraissée,

sur laquelle on applique aussitôt une deuxième tôle, également non dégraissée. L'assemblage ainsi formé est porté à une température de l'order de 170-180 ° C dans un four. La réticulation est complète au bout de quelques secondes.

Un excellent collage est obtenu, bien que les tôles n'aient pas été dégraissées, et ce, beaucoup plus rapidement qu'avec les colles classiques époxy ou polyuréthanne. Une telle constatation est intéressante sur le plan pratique, notamment pour le domaine de l'industrie automobile.

## Revendications

**1.** Système bi-composants pour adhésif thermofusible réticulable, caractérisé par le fait qu'il comporte:

- un premier composant ne renfermant pas de groupes anhydride et obtenu par mélange des constituants de la composition (A) suivante à une température suffisante pour conduire à un liquide homogène :
  a) au moins un polymère choisi parmi les polymères thermoélastiques et les caoutchoucs de synthèse;
  b) au moins un composé renfermant au moins un groupement susceptible de réagir avec des groupes anhydride,
  c) au moins une résine tackifiante ; et
  d) le cas échéant, au moins un plastifiant ;
- un second composant obtenu de la même façon que le premier mais de façon séparée à partir des constituants de la composition (B) suivante :
  a) au moins un polymère choisi parmi les polymères thermoélastiques et les caoutchoucs de synthèse ;
  b) au moins un composé renfermant au moins un groupe anhydride ;
  c) au moins une résine tackifiante ; et
  d) le cas échéant, au moins un plastifiant ; et
  au moins un activateur (C) de la réaction entre les groupements réactifs du constituant (Ab) et les fonctions anhydride du constituant (Bb) étant incorporé dans le composant (A) et/ou dans le composant (B).

**2.** Système bi-composants selon la revendication 1, caractérisé par le fait que le rapport molaire des groupements réactifs du constituant (Ab) aux groupes anhydride du constituant (Bb) est au moins égal à 1, et le rapport molaire de l'activateur (C) aux groupes anhydride du constituant (Bb) est au moins égal à 0,5.

**3.** Système bi-composants selon l'une des revendications 1 et 2, caractérisé par le fait que les polymères thermoélastiques entrant dans la définition des constituants (Aa) et (Ba) sont choisis dans le groupe formé par les copolymères alcène en $C_2$-$C_{12}$/(méth)acrylate d'alkyle en $C_1$-$C_{12}$ et les polymères du norbornène et/ou de ses dérivés.

**4.** Système bi-composants selon l'une des revendications 1 à 3, caractérisé par le fait que les caoutchoucs de synthèse entrant dans la définition des constituants (Aa) et (Ba) sont choisis parmi les copolymères à blocs styrène-diène-styrène.

**5.** Système bi-composants selon l'une des revendications 1 à 4, caractérisé par le fait que le composé (Ab) renferme au moins un groupement époxyde.

**6.** Système bi-composants selon la revendication 5, caractérisé par le fait que le composé (Ab) est un composé polyépoxydique de formule générale :

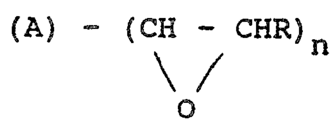

dans laquelle A est un groupe polyfonctionnel de valence n ≧ 2 et R est un radical hydrocarboné ou un atome d'hydrogène.

7. Système bi-composants selon la revendication 5, caractérisé par le fait que le composé (Ab) est un copolymère d'au moins une oléfine en $C_2$-$C_8$ avec au moins un monomère insaturé renfermant un groupement époxy.

8. Système bi-composants selon l'une des revendications 1 à 7, caractérisé par le fait que le composé (Ab) renferme au moins un groupement amine.

9. Système bi-composants selon la revendication 8, caractérisé par le fait que le composé (Ab) est un polyamide à fonctions amine libres.

10. Système bi-composants selon l'une des revendications 1 à 9, caractérisé par le fait que le composé (Ab) renferme au moins un groupement choisi parmi alcool et thiol.

11. Système bi-composants selon l'une des revendications 1 à 10, caractérisé par le fait que le composé (Bb) est un polymère renfermant des groupes choisis parmi les groupes anhydride maléique, itaconique et phtalique.

12. Système bi-composants selon la revendication 11, caractérisé par le fait que le polymère (Bb) renferme, outre des motifs dérivés d'un anhydride, des motifs dérivés d'au moins un alcène et, le cas échéant, des motifs dérivés d'au moins un comonomère, choisi parmi les acrylates et méthacrylates d'alkyle en $C_1$-$C_{12}$.

13. Système bi-composants selon l'une des revendications 1 à 12, caractérisé par le fait que les résines tackifiantes (Ac) et (Bc) sont choisies parmi les polyterpènes, les colophanes et esters de colophanes ainsi que leurs dérivés hydrogénés, et les résines de pétrole.

14. Système bi-composants selon l'une des revendications 1 à l3, caractérisé par le fait que les plastifiants (Ad) et (Bd) sont choisis parmi les huiles semi-aliphatiques, les polyisobutylènes de très bas poids moléculaire et les huiles pétrolières aromatiques, naphténiques ou paraffiniques, les alkylbenzènes, les esters dérivés d'acides organiques saturés, et les copolymères éthylène-acétate de vinyle de très bas poids moléculaire.

15. Système bi-composants selon l'une des revendications 1 à 14, caractérisé par le fait que l'activateur (C) est choisi parmi les amines tertiaires, les phosphines, les halogénures d'aryl- ou alkylphosphonium et les amides tertiaires d'acides gras.

16. Système bi-composants selon l'une des revendications 1 à 15, caractérisé par le fait que le rapport molaire de l'activateur (C) aux groupes anhydride du polymère (Bb) est au moins égal à 1.

17. Système bi-composants selon l'une des revendications 1 à 16, caractérisé par le fait qu'au moins l'une des compositions (A) et (B) renferme jusqu'à 10 parties en poids, pour 100 parties en poids de ladite composition, d'au moins un adjuvant choisi parmi les cires et paraffines.

18. Système bi-composants selon l'une des revendications 1 à 17, caractérisé par le fait qu'il comprend en outre un film de matière thermoplastique chimiquement inerte vis-à-vis de chacun des deux composants et portant sur chacune de ses faces une couche de l'un desdits composants, de manière à former un film tricouche.

19. Procédé de préparation d'un système bi-composants selon l'une des revendications 1 à 17, caractérisé par le fait qu'on mélange séparément les constituants de la composition (A) et ceux de la composition (B) à une température suffisante pour obtenir des liquides homogènes, et qu'on refroidit chacun des deux mélanges liquides tout en incorporant l'activateur (C) à au moins une desdites compositions (A) et (B).

20. Procédé selon la revendication 19, caractérisé par le fait que la température de mélange des

constituants de chaque composition (A) et (B) est supérieure d'au moins 10° C au point de ramollissement de ladite composition.

**21.** Procédé selon l'une des revendications 19 et 20, caractérisé par le fait que la température de la composition à laquelle on incorpore l'activateur (C) est comprise entre 120 et 170° C.

**22.** Procédé selon l'une des revendications 19 à 21, le système bi-composants comprenant en outre un film de matière thermoplastique chimiquement inerte vis-à-vis de chacun des deux composants et portant sur chacune de ses faces une couche de l'un desdits composants, caractérisé par le fait que, après avoir préparé les deux composants dudit système, on applique l'un d'eux sur une face dudit film et l'autre sur l'autre face.

**23.** Procédé selon la revendication 22, caractérisé par le fait que l'application du composant sur une face du film est effectuée par coextrusion.

**24.** Procédé selon l'une des revendications 22 et 23, caractérisé par le fait que l'application du composant sur une face du film est effectuée par enduction.

**25.** Procédé de collage de deux objets, caractérisé par le fait que l'on porte à une température comprise entre 120 et 220° C chacun des composants du système de l'une des revendication 1 à 17, puis :
- soit on les mélange intimement à cette température, puis on applique l'adhésif thermofusible résultant sur au moins l'un des deux objets à encoller, et enfin on applique l'un des objets encollés contre l'autre,
- soit on applique séparément les deux composants soit l'un après l'autre sur l'un des deux objets à encoller, soit l'un sur un objet à encoller et l'autre, sur l'autre objet à encoller, puis on applique l'un contre l'autre lesdits objets.

**26.** Procédé de collage selon la revendication 25, caractérisé par le fait qu'après avoir appliqué les deux objets l'un contre l'autre, on chauffe l'assemblage pendant une durée suffisante pour achever la réticulation.

**27.** Procédé de collage de deux objets à l'aide d'un système selon la revendication 18, caractérisé par le fait qu'on assemble les deux objets au moyen du film tricouche, puis on porte l'ensemble à une température supérieure au point de fusion du film thermoplastique inerte, et suffisante pour permettre la migration de l'un des composés (Ab) et (Bb) vers l'autre, leur entrée en contact provoquant la réticulation du système.

Revendications pour l'Etat contractant suivant : ES

**1.** Procédé de préparation d'un système bi-composants pour adhésif thermofusible réticulable, caractérisé par le fait qu'on mélange, à une température suffisante pour obtenir des liquides homogènes, de façon séparée, les constituants de la composition (A) suivante :

a) au moins un polymère choisi parmi les polymères thermoélastiques et les caoutchoucs de synthèse;

b) au moins un composé renfermant au moins un groupement susceptible de réagir avec des groupes anhydride,

c) au moins une résine tackifiante ; et

d) le cas échéant, au moins un plastifiant ;

ainsi que ceux de la composition (B) suivante :

a) au moins un polymère choisi parmi les polymères thermoélastiques et les caoutchoucs de synthèse ;

b) au moins un composé renfermant au moins un groupe anhydride ;

c) au moins une résine tackifiante ; et

d) le cas échéant, au moins un plastifiant ; et

qu'on refroidit chacun des deux mélanges liquides tout en incorporant au moins un activateur (C) de la réaction entre les groupements réactifs du constituant (Ab) et les fonctions anhydride du constituant (Bb) à au moins une desdites compositions (A) et (B), le composant issu de la composition (A) ne renfermant pas de groupes anhydride.

2. Procédé selon la revendication 1, caractérisé par le fait que le rapport molaire des groupements réactifs du constituant (Ab) aux groupes anhydride du constituant (Bb) est au moins égal à 1, et le rapport molaire de l'activateur (C) aux groupes anhydride du constituant (Bb) est au moins égal à 0,5.

3. Procédé selon l'une des revendications 1 et 2, caractérisé par le fait que les polymères thermoélastiques entrant dans la définition des constituants (Aa) et (Ba) sont choisis dans le groupe formé par les copolymères alcène en $C_2$-$C_{12}$/(méth)acrylate d'alkyle en $C_1$-$C_{12}$ et les polymères du norbornène et/ou de ses dérivés.

4. Procédé selon l'une des revendications 1 à 3, caractérisé par le fait que les caoutchoucs de synthèse entrant dans la définition des constituants (Aa) et (Ba) sont choisis parmi les copolymères à blocs styrène-diène-styrène.

5. Procédé selon l'une des revendications 1 à 4, caractérisé par le fait que le composé (Ab) renferme au moins un groupement époxyde.

6. Procédé selon la revendication 5, caractérisé par le fait que le composé (Ab) est un composé polyépoxydique de formule générale :

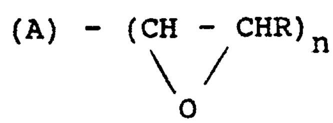

dans laquelle A est un groupe polyfonctionnel de valence $n \geqq 2$ et R est un radical hydrocarboné ou un atome d'hydrogène.

7. Procédé selon la revendication 5, caractérisé par le fait que le composé (Ab) est un copolymère d'au moins une oléfine en $C_2$-$C_8$ avec au moins un monomère insaturé renfermant un groupement époxy.

8. Procédé selon l'une des revendications 1 à 7, caractérisé par le fait que le composé (Ab) renferme au moins un groupement amine.

9. Procédé selon la revendication 8, caractérisé par le fait que le composé (Ab) est un polyamide à fonctions amine libres.

10. Procédé selon l'une des revendications 1 à 9, caractérisé par le fait que le composé (Ab) renferme au moins un groupement choisi parmi alcool et thiol.

11. Procédé selon l'une des revendications 1 à 10, caractérisé par le fait que le composé (Bb) est un polymère renfermant des groupes choisis parmi les groupes anhydride maléique, itaconique et phtalique.

12. Procédé selon la revendication 11, caractérisé par le fait que le polymère (Bb) renferme, outre des motifs dérivés d'un anhydride, des motifs dérivés d'au moins un alcène et, le cas échéant, des motifs dérivés d'au moins un comonomère, choisi parmi les acrylates et méthacrylates d'alkyle en $C_1$-$C_{12}$.

13. Procédé selon l'une des revendications 1 à 12, caractérisé par le fait que les résines tackifiantes (Ac) et (Bc) sont choisies parmi les polyterpènes, les colophanes et esters de colophanes ainsi que leurs dérivés hydrogénés, et les résines de pétrole.

14. Procédé selon l'une des revendications 1 à 13, caractérisé par le fait que les plastifiants (Ad) et (Bd) sont choisis parmi les huiles semi-aliphatiques, les polyisobutylènes de très bas poids moléculaire et les huiles pétrolières aromatiques, naphténiques ou paraffiniques, les alkylbenzènes, les esters dérivés d'acides organiques saturés, et les copolymères éthylène-acétate de vinyle de très bas poids moléculaire.

**15.** Procédé selon l'une des revendications 1 à 14, caractérisé par le fait que l'activateur (C) est choisi parmi les amines tertiaires, les phosphines, les halogénures d'aryl- ou alkylphosphonium et les amides tertiaires d'acides gras.

**16.** Procédé selon l'une des revendications 1 à 15, caractérisé par le fait que le rapport molaire de l'activateur (C) aux groupes anhydride du polymère (Bb) est au moins égal à 1.

**17.** Procédé selon l'une des revendications 1 à 16, caractérisé par le fait qu'au moins l'une des compositions (A) et (B) renferme jusqu'à 10 parties en poids, pour 100 parties en poids de ladite composition, d'au moins un adjuvant choisi parmi les cires et paraffines.

**18.** Procédé selon l'une des revendications I à 17, caractérisé par le fait que la température de mélange des constituants de chaque composition (A) et (B) est supérieure d'au moins 10 °C au point de ramollissement de ladite composition.

**19.** Procédé selon l'une des revendications 1 à 18, caractérisé par le fait que la température de la composition à laquelle on incorpore l'activateur (C) est comprise entre 120 et 170 °C.

**20.** Procédé selon l'une des revendications 1 à 19, suivant lequel le système bi-composants comprend en outre un film de matière thermoplastique chimiquement inerte vis-à-vis de chacun des deux composants et portant sur chacune de ses faces une couche de l'un desdits composants, de manière à former un film tricouche, caractérisé par le fait que, après avoir préparé les deux composants dudit système, on applique l'un d'eux sur une face dudit film et l'autre sur l'autre face.

**21.** Procédé selon la revendication 20, caractérisé par le fait que l'application du composant sur une face du film est effectuée par coextrusion.

**22.** Procédé selon l'une des revendications 20 et 21, caractérisé par le fait que l'application du composant sur une face du film est effectuée par enduction.

**23.** Procédé de collage de deux objets, caractérisé par le fait que l'on porte à une température comprise entre 120 et 220 °C chacun des composants du système préparé par le procédé tel que défini à l'une des revendications 1 à 19, puis :
- soit on les mélange intimement à cette température, puis on applique l'adhésif thermofusible résultant sur au moins l'un des deux objets à encoller, et enfin on applique l'un des objets encollés contre l'autre,
- soit on applique séparément les deux composants soit l'un après l'autre sur l'un des deux objets à encoller, soit l'un sur un objet à encoller et l'autre, sur l'autre objet à encoller, puis on applique l'un contre l'autre lesdits objets.

**24.** Procédé de collage selon la revendication 23, caractérisé par le fait qu'après avoir appliqué les deux objets l'un contre l'autre, on chauffe l'assemblage pendant une durée suffisante pour achever la réticulation.

**25.** Procédé de collage de deux objets à l'aide d'un système préparé par le procédé tel que défini à l'une des revendications 20 à 22, caractérisé par le fait qu'on assemble les deux objets au moyen du film tricouche, puis on porte l'ensemble à une température supérieure au point de fusion du film thermoplastique inerte, et suffisante pour permettre la migration de l'un des composés (Ab) et (Bb) vers l'autre, leur entrée en contact provoquant la réticulation du système.

## Claims

**1.** A two-component system for a hot-melt cross-linking adhesive, characterized by the fact that it comprises :
- a first component not containing any anhydride groups and obtained by mixing the constituents of the following composition (A) at a temperature sufficient for obtaining a homogeneous liquid :
  a) at least one polymer chosen from thermoelastic polymers and synthetic rubbers ;

b) at least one compound containing at least one group capable of reacting with anhydride groups ;
c) at least one tackifying resin ; and
d) if desired, at least one plasticizer ;

- a second component obtained in the same manner as the first one, but in separate manner from the constituents of the following composition (B) :
a) at least one polymer chosen from thermoelastic polymers and synthetic rubbers ;
b) at least one compound containing at least one anhydride group ;
c) at least one tackifying resin ; and
d) if desired, at least one plasticizer ; and
at least one activator (C) of the reaction between the reactive groups of the constituent (Ab) and the anhydride functions of the constituent (Bb) being incorporated in the component (A) and/or the component (B).

**2.** The two-component system according to claim 1, characterized by the fact that the molar ratio of the reactive groups of the constituent (Ab) to the anhydride groups of the constituent (Bb) is at least equal to 1, and the molar ratio of the activator (C) to the anhydride groups of the constituent (Bb) is a least equal to 0.5.

**3.** The two-component system according to one of claims 1 and 2, characterized by the fact that the thermoelastic polymers included in the definition of the constituents (Aa) and (Ba) are chosen from the group consisting of $C_2$-$C_{12}$ alkene/$C_1$-$C_{12}$-alkyl (meth)acrylate copolymers, and the polymers of norbornene and/or of its derivatives.

**4.** The two-component system according to one of claims 1 to 3, characterized by the fact that the synthetic rubbers included in the definition of the constituents (Aa) and (Ba) are chosen from the styrene-diene-styrene block copolymers.

**5.** The two-component system according to one of claims 1 to 4, characterized by the fact that the compound (Ah) contains at least one epoxy group.

**6.** The two-component system according to claim 5, characterized by the fact that the compound (Ab) is a polyepoxy compound of the general formula :

```
(A) - (CH - CHR)n
         \ /
          O
```

in which A a is a polyfunctional group of valency n ≧ 2, and R is a hydrocarbon radical or a hydrogen atom.

**7.** The two-component system according to claim 5, characterized by the fact that the compound (Ab) is-a copolymer of at least one $C_2$-$C_8$ olefine with at least one unsaturated monomer containing an epoxy group.

**8.** The two-component system according to one of claims 1 to 7, characterized by the fact that the compound (Ab) contains at least one amine group.

**9.** The two-component system according to claim 8, characterized by the fact that the compound (Ab) is a polyamide with free amine functions.

**10.** The two-component system according to one of claims 1 to 9, characterized by the fact that the compound (Ab) contains at least one group chosen from alcohol and thiol.

**11.** The two-component system according to one of claims 1 to 10, characterized by the fact that the

compound (Bb) is a polymer containing groups chosen from the maleic, itaconic and phthalic anhydride groups.

12. The two-component system according to claim 11, characterized by the fact that the polymer (Bb) contains apart from groups derived from an anhydride, groups derived from at least one alkene and, if desired, groups derived from at least one comonomer, chosen from $C_1$-$C_{12}$ alkyl acrylates and methacrylates.

13. The two-component system according to one of claims 1 to 12, characterized by the fact that the tackifying resins (Ac) and (Bc) are chosen from polyterpenes, colophonies and colophony esters as well as their hydrogenated derivatives, and petroleum resins.

14. The two-component system according to one of claims 1 to 11, characterized by the fact that the plasticizers (Ad) and (Bd) are chosen from the semi-aliphatic oils, the polyisobutylenes of very low molecular weight and the aromatic, naphthenic or paraffinic petroleum oils, the alkylbenzenes, the esters derived from saturated organic acids, and the ethylene-vinyl acetate copolymers of very low molecular weight.

15. The two-component system according to one of claims 1 to 14, characterized by the fact that the activator (C) is chosen from tertiary amines, phosphines, aryl or alkyl phosphonium halides and the tertiary amides of fatty acids.

16. The two-component system according to one of claims 1 to 15, characterized by the fact that the molar ratio of the activator (C) to the anhydride groups of the polymer (Bb) is at least equal to 1.

17. The two-component system according to one of claims 1 to 16, characterized by the fact that at least one of the compositions (A) and (B) contains up to 10 parts by weight, per 100 parts by weight of said composition, of at least one adjuvant chosen from waxes and paraffins.

18. The two-component system according to one of claims 1 to 17, characterized by the fact that it additionally comprises a film of thermoplastic material which is chemically inert to both of the two components and having on each of its faces a layer of one of said components, so as to form a three-layer film.

19. Method for preparing a two-component system according to one of claims 1 to 17, characterized by the fact that the constituents of the composition (A) and those of the composition (B) are separetely mixed at a temperature sufficient for obtaining homogeneous liquids, and that each of the two liquid mixtures is then cooled while incorporating the activator (C) in at least one of said compositions (A) and (B).

20. The method according to claim 19, characterized by the fact that the temperature of mixing the constituents of each composition (A) and (B) is at least 10 °C higher than the softening point of said composition.

21. The method according to one of claims 19 and 20, characterized by the fact that the temperature of the composition at which the activator (C) is incorporated lies between 120 and 170 °C.

22. The method according to one of claims 19 to 21, in which the two-component system additionally comprises a film of thermoplastic material which is chemically inert to each of the two components and carries on each of its faces a layer of one of said components, characterized by the fact that after the two components of said system have been prepared, one of them is applied to one face of said film and the other to the other face.

23. The method according to claim 22, characterized by the fact that the application of the component to one face of the film is carried out by coextrusion.

24. The method according to one of claims 22 and 23, characterized by the fact that the application of the component on one face of the film is carried out by coating.

**25.** Method of gluing two objects, characterized by the fact that each of the components of the system of one of claims 1 to 17 is brought to a temperature lying between 120 and 220 °C, and then :

- either they are intimately mixed at that temperature, and the resulting thermoplastic adhesive is applied to at least one of the two objects to be glued, and finally one of the glued objects is applied against the other,
- or the two components are separetely applied either one after the other onto one of the two objects to be glued, or one on one object to be glued and the other on the other object to be glued, and said objects are then applied one against the other.

**26.** The method of gluing according to claim 25, characterized by the fact that after the two objects have been applied one against the other, their assembly is heated in order to effect cross-linking.

**27.** Method of gluing two objects with the aid of a system according to claim 18, characterized by the fact that the two objects are assembled by means of a three-layer film, and that the assembly is brought to a temperature above the melting point of the inert thermoplastic film, and sufficient to permit migration of one of the compounds (Ab) and (Bb) towards the other, whereby their entry into contact causes cross-linking of the system.

Claims for the following Contracting State : ES

**1.** Method for preparing a two-component system for a hot-melt cross-linking adhesive, characterized by the fact that the constituents of the following composition (A) are separetely mixed at a temperature sufficient for obtaining homogeneous liquids :

a) at least one polymer chosen from thermoelastic polymers and synthetic rubbers ;
b) at least one compound containing at least one group capable of reacting with anhydride groups ;
c) at least one tackifying resin ; and
d) if desired, at least one plasticizer ;
and those of the following composition (B) :
a) at least one polymer chosen from thermoelastic polymers and synthetic rubbers ;
b) at least one compound containing at least one anhydride group ;
c) at least one tackifying resin ; and
d) if desired, at least one plasticizer ;
and that each of the two liquid mixtures is then cooled while incorporating at least one activator (C) of the reaction between the reactive groups of the constituent (Ab) and the anhydride functions of the constituent (Bb) in at least one of said compositions (A) and (B), the component derived from the composition (A) not containing any anhydride groups.

**2.** The method according to claim 1, characterized by the fact that the molar ratio of the reactive groups of the constituent (Ab) to the anhydride groups of the constituent (Bb) is at least equal to 1, and the molar ratio of the activator (C) to the anhydride groups of the constituent (Bb) is a least equal to 0.5.

**3.** The method according to one of claims 1 and 2, characterized by the fact that the thermoelastic polymers included in the definition of the constituents (Aa) and (Ba) are chosen from the group consisting of $C_2$-$C_{12}$ alkene/$C_1$-$C_{12}$-alkyl (meth)acrylate copolymers, and the polymers of norbornene and/or of its derivatives.

**4.** The method according to one of claims 1 to 3, characterized by the fact that the synthetic rubbers included in the definition of the constituents (Aa) and (Ba) are chosen from the styrene-diene-styrene block copolymers.

**5.** The method according to one of claims 1 to 4, characterized by the fact that the compound (Ab) contains at least one epoxy group.

**6.** The method according to claim 5, characterized by the fact that the compound (Ab) is a polyepoxy compound of the general formula :

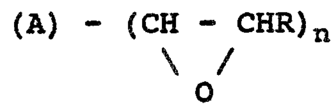

in which A a is a polyfunctional group of valency n ≧ 2, and R is a hydrocarbon radical or a hydrogen atom.

7. The method according to claim 5, characterized by the fact that the compound (Ab) is a copolymer of at least one $C_2$-$C_8$ olefine with at least one unsaturated monomer containing an epoxy group.

8. The method according to one of claims 1 to 7, characterized by the fact that the compound (Ab) contains at least one amine group.

9. The method according to claim 8, characterized by the fact that the compound (Ab) is a polyamide with free amine functions.

10. The method according to one of claims 1 to 9, characterized by the fact that the compound (Ab) contains at least one group chosen from alcohol and thiol.

11. The method according to one of claims 1 to 10, characterized by the fact that the compound (Bb) is a polymer containing groups chosen from the maleic, itaconic and phthalic anhydride groups.

12. The method according to claim 11, characterized by the fact that the polymer (Bb) contains apart from groups derived from an anhydride, groups derived from at least one alkene and, if desired, groups derived from at least one comonomer, chosen from $C_1$-$C_{12}$ alkyl acrylates and methacrylates.

13. The method according to one of claims 1 to 12, characterized by the fact that the tackifying resins (Ac) and (Bc) are chosen from polyterpenes, colophonies and colophony esters as well as their hydrogenated derivatives, and petroleum resins.

14. The method according to one of claims 1 to 13, characterized by the fact that the plasticizers (Ad) and (Bd) are chosen from the semi-aliphatic oils, the polyisobutylenes of very low molecular weight and the aromatic, naphthenic or paraffinic petroleum oils, the alkylbenzenes, the esters derived from saturated organic acids, and the ethylene-vinyl acetate copolymers of very low molecular weight.

15. The method according to one of claims 1 to 14, characterized by the fact that the activator (C) is chosen from tertiary amines, phosphines, aryl or alkyl phosphonium halides and the tertiary amides of fatty acids.

16. The method according to one of claims 1 to 15, characterized by the fact that the molar ratio of the activator (C) to the anhydride groups of the polymer (Bb) is at least equal to 1.

17. The method according to one of claims 1 to 16, characterized by the fact that at least one of the compositions (A) and (B) contains up to 10 parts by weight, per 100 parts by weight of said composition, of at least one adjuvant chosen from waxes and paraffins.

18. The method according to one of claims 1 to 17, characterized by the fact that the temperature of mixing the constituents of each composition (A) and (B) is at least 10 °C higher than the softening point of said composition.

19. The method according to one of claims 1 to 18, characterized by the fact that the temperature of the composition at which the activator (C) is incorporated lies between 120 and 170 °C.

20. The method according to one of claims 1 to 19, in which the two-component system additionally comprises a film of thermoplastic material which is chemically inert to each of the two components and carries on each of its faces a layer of one of said components, so as to form a three-layer film,

characterized by the fact that after the two components of said system have been prepared, one of them is applied to one face of said film and the other to the other face.

**21.** The method according to claim 20, characterized by the fact that the application of the component to one face of the film is carried out by coextrusion.

**22.** The method according to one of claims 20 and 21, characterized by the fact that the application of the component on one face of the film is carried out by coating.

**23.** Method of gluing two objects, characterized by the fact that each of the components of the system prepared by the method according to one of claims 1 to 19 is brought to a temperature lying between 120 and 220 °C, and then :
- either they are intimately mixed at that temperature, and the resulting thermoplastic adhesive is applied to at least one of the two objects to be glued, and finally one of the glued objects is applied against the other,
- or the two components are separetely applied either one after the other onto one of the two objects to be glued, or one on one object to be glued and the other on the other object to be glued, and said objects are then applied one against the other.

**24.** The method of gluing according to claim 23, characterized by the fact that after the two objects have been applied one against the other, their assembly is heated in order to effect cross-linking.

**25.** Method of gluing two objects with the aid of a system prepared by the method according to one of claims 20 to 22, characterized by the fact that the two objects are assembled by means of a three-layer film, and that the assembly is brought to a temperature above the melting point of the inert thermoplastic film, and sufficient to permit migration of one of the compounds (Ab) and (Bb) towards the other, whereby their entry into contact causes cross-linking of the system.

## Ansprüche

**1.** Zweikomponentensystem für vernetzbare Schmelzklebestoffe,

**dadurch gekennzeichnet,**

daß es umfaßt:
- eine erste Komponente, die keine Anhydridgruppen enthält und durch Mischen der Bestandteile der folgenden Zusammensetzung (A) bei einer ausreichenden Temperatur erhalten wird, um zu einer homogenen Flüssigkeit zu führen:
  a) mindestens ein unter den thermoelastischen Polymeren und den Synthesekautschuken ausgewähltes Polymer;
  b) mindestens eine Verbindung, die mindestens eine Gruppe enthält, die mit Anhydridgruppen reagieren kann,
  c) mindestens ein klebrigmachendes Harz,
  und
  d) gegebenenfalls mindestens einen Weichmacher;
- eine zweite Komponente, die auf die gleiche Art wie die erste, aber getrennt, ausgehend von den Bestandteilen der folgenden Zusammensetzung (B) erhalten wird:
  a) mindestens ein unter den thermoelastischen Polymeren und den Synthesekautschuken ausgewähltes Polymer,
  b) mindestens eine Verbindung, die mindestens eine Anhydridgruppe enthält,
  c) mindestens ein klebrigmachendes Harz,
  und
  d) gegebenenfalls mindestens ein Weichmacher; und

mindestens einen Aktivator (C) der Reaktion zwischen den reaktiven Gruppen des Bestandteils (Ab) und den Anhydridfunktionen des Bestandteils (Bb), der in der Komponente (A) und/oder der Komponente (B) eingefügt ist.

2. Zweikomponentensystem nach Anspruch 1, dadurch gekennzeichnet, daß das molare Verhältnis der reaktiven Gruppen des Bestandteils (Ab) zu den Anhydridgruppen des Bestandteils (Bb) mindestens gleich 1. ist und das molare Verhältnis des Aktivators (C) zu den Anhydridgruppen des Bestandteils (Bb) mindestens gleich 0,5 ist.

3. Zweikomponentensystem nach Anspruch 1 oder 2, dadurch gekennzeichnet, daß die thermoelastischen Polymere, die unter die Definition der Bestandteile (Aa) und (Bb) fallen, unter $C_2$-$C_{12}$-Alken/$C_1$-$C_{12}$-Alkyl(meth)acrylat-Copolymeren und Norborninpolymeren und/oder seinen Derivaten ausgewählt werden.

4. Zweikomponentensystem nach einem der Ansprüche 1 bis 3, dadurch gekennzeichnet, daß die Synthesekautschuke, die unter die Definition der Bestandteile (Aa) und (Ba) fallen, unter den Styrol-dien-styrol-Blockcopolymerisaten ausgewählt werden.

5. Zweikomponentensystem nach einem der Ansprüche 1 bis 4, dadurch gekennzeichnet, daß die Verbindung (Ab) mindestens eine Epoxygruppe enthält.

6. Zweikomponentensystem nach Anspruch 5, dadurch gekennzeichnet, daß die Verbindung (Ab) eine Polyepoxyverbindung der allgemeinen Formel:

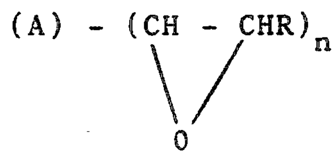

ist, in der A eine polyfunktionelle Gruppe der Wertigkeit n ≧ 2 und R ein Kohlenwasserstoffrest oder ein Wasserstoffatom ist.

7. Zweikomponentensystem nach Anspruch 5, dadurch gekennzeichnet, daß die Verbindung (Ab) ein Copolymer von mindestens einem $C_2$-$C_8$-Olefin mit mindestens einem ungesättigten Monomer, das eine Epoxygruppe enthält, ist.

8. Zweikomponentensystem nach einem der Ansprüche 1 bis 7, dadurch gekennzeichnet, daß die Verbindung (Ab) mindestens eine Aminogruppe enthält.

9. Zweikomponentensystem nach Anspruch 8, dadurch gekennzeichnet, daß die Verbindung (Ab) ein Polyamid mit freien Aminofunktionen ist.

10. Zweikomponentensystem nach einem der Ansprüche 1 bis 9, dadurch gekennzeichnet, daß die Verbindung (Ab) mindestens eine unter Alkohol und Thiol ausgewählte Gruppe enthält.

11. Zweikomponentensystem nach einem der Ansprüche 1 bis 10, dadurch gekennzeichnet, daß die Verbindung (Bb) ein Polymer ist, das unter Anhydridgruppen der Maleinsäure, der Itaconsäure und der Phthalsäure ausgewählte Gruppen enthält.

**12.** Zweikomponentensystem nach Anspruch 11,
dadurch gekennzeichnet,
daß das Polymer (Bb) außer von einem Anhydrid abgeleiteten Struktureinheiten von mindestens einem Alken abgeleitete Struktureinheiten und gegebenenfalls von mindestens einem unter $C_1$-$C_{12}$-Alkylacrylaten und -Methacrylaten ausgewählten Comonomer abgeleitete Struktureinheiten enthält.

**13.** Zweikomponentensystem nach einem der Ansprüche 1 bis 12,
dadurch gekennzeichnet,
daß die klebrigmachenden Harze (Ac) und (Bc) unter Polyterpenen, Colophonia und Colophoniaestern sowie ihren hydrierten Derivaten und Petrolharzen ausgewählt werden.

**14.** Zweikomponentensystem nach einem der Ansprüche 1 bis 13,
dadurch gekennzeichnet,
daß die Weichmacher (Ad) und (Bd) unter semialiphatischen Ölen, Polyisobutylenen von sehr geringem Molekulargewicht und aromatischen, naphthenischen oder paraffinischen Petrolölen, Alkylbenzolen, Estern von gesättigten organischen Säuren und Ethylen-Vinylacetat-Copolymeren von sehr geringem Molekulargewicht ausgewählt werden.

**15.** Zweikomponentensystem nach einem der Ansprüche 1 bis 14,
dadurch gekennzeichnet,
daß der Aktivator (C) unter tertiären Aminen, Phosphinen, Aryl- oder Alkylphosphoniumhalogeniden und tertiären Amiden von Fettsäuren ausgewählt wird.

**16.** Zweikomponentensystem nach einem der Ansprüche 1 bis 15,
dadurch gekennzeichnet,
daß das molare Verhältnis des Aktivators (C) zu den Anhydridgruppen des Polymers (Bb) mindestens gleich 1 ist.

**17.** Zweikomponentensystem nach einem der Ansprüche 1 bis 16,
dadurch gekennzeichnet,
daß mindestens eine der Zusammensetzungen (A) und (B) bis zu 10 Gew.-Teile mindestens eines unter Wachsen und Paraffinen ausgewählten Zusatzstoffes je 100 Gew.-Teile der Zusammensetzung enthält.

**18.** Zweikomponentensystem nach einem der Ansprüche 1 bis 17,
dadurch gekennzeichnet,
daß es ferner einen Film eines Thermoplasten enthält, der chemisch gegen jeden der beiden Bestandteile inert ist und der auf jeder seiner Flächen eine Schicht einer dieser Bestandteile trägt, um einen Film mit drei Schichten zu bilden.

**19.** Verfahren zur Herstellung eines Zweikomponentensystems nach einem der Ansprüche 1 bis 17,
gekennzeichnet durch
getrenntes Mischen der Bestandteile der Zusammensetzung (A) und der der Zusammensetzung (B) bei einer ausreichenden Temperatur, um homogene Flüssigkeiten zu erhalten, und durch Abkühlen jeder der beiden flüssigen Gemische, wobei der Aktivator (C) mindestens einer der Zusammensetzungen (A) und (B) zugesetzt wird.

**20.** Verfahren nach Anspruch 19,
dadurch gekennzeichnet,
daß die Temperatur des Gemischs jeder Zusammensetzung (A) und (B) mindestens 10 °C höher als der Erweichungspunkt der Zusammensetzung ist.

**21.** Verfahren nach Anspruch 19 oder 20,
dadurch gekennzeichnet,
daß die Temperatur der Zusammensetzung, der der Aktivator (C) zugesetzt wird, 120 bis 170 °C beträgt.

**22.** Verfahren nach einem der Ansprüche 19 bis 21, wobei das Zweikomponentensystem ferner einen Film eines Thermoplasten, der chemisch gegen jede der beiden Zusammensetzungen inert ist und auf jeder

seiner Flächen eine Schicht eines dieser Bestandteile trägt, enthält,

**dadurch gekennzeichnet,**

daß nach der Herstellung der beiden Komponenten des Systems die auf eine Fläche des Films und die andere auf die andere Fläche aufgetragen werden.

**23.** Verfahren nach Anspruch 22,
gekennzeichnet durch
das Auftragen der Komponente auf eine Fläche des Films durch Coextrusion.

**24.** Verfahren nach Anspruch 22 oder 23,
gekennzeichnet durch
das Auftragen der Komponente auf eine Fläche des Films durch Beschichtung.

**25.** Verfahren zum Kleben zweier Objekte,
dadurch gekennzeichnet,
daß jede der Komponenten des Systems nach einem der Ansprüche 1 bis 17 auf 120 bis 220 °C erwärmt wird und dann:

- entweder sie bei dieser Temperatur intensiv vermischt werden, dann der sich hieraus ergebende Schmelzklebestoff auf mindestens auf eines der beiden zu klebenden Objekte aufgetragen wird und schließlich eines der zu klebenden Objekte auf das andere aufgebracht wird,
- oder die beiden Komponenten getrennt entweder eine nach der anderen auf ein zu klebendes Objekt oder eine auf das eine und die andere auf das andere zu klebende Objekt aufgetragen werden und dann das eine auf das andere Objekt aufgebracht wird.

**26.** Klebeverfahren nach Anspruch 25,
dadurch gekennzeichnet,
daß nach Aufbringen des einen Objekts auf das andere das System ausreichend lange erhitzt wird, um die Vernetzung zu vollenden.

**27.** Verfahren zum Kleben zweier Objekte mit Hilfe eines Systems nach Anspruch 18,

**dadurch gekennzeichnet,**

daß die beiden Objekte mittels eines Films mit drei Schichten verbunden werden, dann das System auf eine Temperatur über dem Schmelzpunkt des inerten thermoplastischen Films erhitzt wird, die ausreicht, die Migration von einem der Bestandteile (Ab) und (Bb) zum anderen zuzulassen, wobei ihre Kontaktaufnahme die Ver netzung des Systems bewirkt.

Patentansprüche für folgenden Vertragsstaat : ES

**1.** Verfahren zur Herstellung eines Zweikomponentensystems für vernetzbare Schmelzklebestoffe,

**gekennzeichnet durch**

getrenntes Mischen bei einer ausreichenden Temperatur, um homogene Flüssigkeiten zu erhalten, der Bestandteile der folgenden Zusammensetzung (A):

a) mindestens ein unter den thermoelastischen Polymeren und den Synthesekautschuken ausgewähltes Polymer,
b) mindestens eine Verbindung, die mindestens eine Gruppe enthält, die mit Anhydridgruppen reagieren kann,
c) mindestens ein klebrigmachendes Harz,
und
d) gegebenenfalls mindestens ein Weichmacher;
sowie die der folgenden Zusammensetzung (B):
a) mindestens ein unter den thermoelastischen Polymeren und den Synthesekautschuken ausgewähltes Polymer,

b) mindestens eine Verbindung, die mindestens eine Anhydridgruppe enthält,
c) mindestens ein klebrigmachendes Harz,
und
d) gegebenenfalls mindestens ein Weichmacher; und

durch Abkühlen jeder der beiden flüssigen Gemische, wobei mindestens ein Aktivator (C) der Reaktion zwischen den reaktiven Gruppen des Bestandteils (Ab) und den Anhydridfunktionen des Bestandteils (Bb) mindestens einer der Zusammensetzungen (A) und (B) zugesetzt wird, wobei der Bestandteil der Zusammensetzung (A) keine Anhydridgruppen enthält.

2. Verfahren nach Anspruch 1,
dadurch gekennzeichnet,
daß das molare Verhältnis der reaktiven Gruppen des Bestandteils (Ab) zu den Anhydridgruppen des Bestandteils (Bb) mindestens gleich 1 ist und das molare Verhältnis des Aktivators (C) zu den Anhydridgruppen des Bestandteils (Bb) mindestens gleich 0,5 ist.

3. Verfahren nach Anspruch 1 oder 2,
dadurch gekennzeichnet,
daß die thermoelastischen Polymere, die unter die Definition der Bestandteile (Aa) und (Bb) fallen, unter $C_2$-$C_{12}$-Alken/$C_1$-$C_{12}$-Alkylmethacrylat-Copolymeren und Norborninpolymeren und/oder seinen Derivaten ausgewählt werden.

4. Verfahren nach einem der Ansprüche 1 bis 3,
dadurch gekennzeichnet,
daß die Synthesekautschuke, die unter die Definition der Bestandteile (Aa) und (Ba) fallen, unter den Styrol-dien-styrol-Blockcopolymerisaten ausgewählt werden.

5. Verfahren nach einem der Ansprüche 1 bis 4,
dadurch gekennzeichnet,
daß die Verbindung (Ab) mindestens eine Epoxygruppe enthält.

6. Verfahren nach Anspruch 5,
dadurch gekennzeichnet,
daß die Verbindung (Ab) eine Polyepoxyverbindung der allgemeinen Formel:

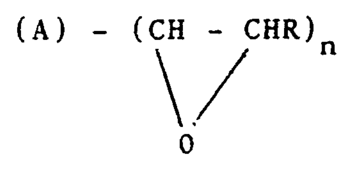

ist,

in der A eine polyfunktionelle Gruppe der Wertigkeit n ≧ 2 und R ein hohlenwasserstoffrest oder ein Wasserstoffatom ist.

7. Verfahren nach Anspruch 5,
dadurch gekennzeichnet,
daß die Verbindung (Ab) ein Copolymer aus mindestens einem $C_2$-$C_8$-Olefin mit mindestens einem ungesättigten Monomer, das eine Epoxygruppe enthält, ist.

8. Verfahren nach einem der Ansprüche 1 bis 7,
dadurch gekennzeichnet,
daß die Verbindung (Ab) mindestens eine Aminogruppe enthält.

9. Verfahren nach Anspruch 8, dadurch gekennzeichnet, daß die Verbindung (Ab) ein Polyamid mit freien Aminofunktionen ist.

10. Verfahren nach einem der Ansprüche 1 bis 9, dadurch gekennzeichnet, daß die Verbindung (Ab) mindestens eine unter Alkohol und Thiol ausgewählte Gruppe enthält.

11. Verfahren nach einem der Ansprüche 1 bis 10, dadurch gekennzeichnet, daß die Verbindung (Bb) ein Polymer ist, das unter Anhydridgruppen der Maleinsäure, der Itaconsäure und der Phthalsäure ausgewählte Gruppen enthält.

12. Verfahren nach Anspruch 11, dadurch gekennzeichnet, daß das Polymer (Bb) außer von einem Anhydrid abgeleiteten Struktureinheiten von mindestens einem Alken abgeleitete Struktureinheiten und gegebenenfalls von mindestens einem unter $C_1$-$C_{12}$-Alkylacrylaten und -Methacrylaten ausgewählten Comonomer abgeleitete Struktureinheiten enthält.

13. Verfahren nach einem der Ansprüche 1 bis 12, dadurch gekennzeichnet, daß die klebrigmachenden Harze (Ac) und (Bc) unter Polyterpenen, Colophonia und Colophoniaestern sowie ihren hydrierten Derivaten und Petrolharzen ausgewählt werden.

14. Verfahren nach einem der Ansprüche 1 bis 13, dadurch gekennzeichnet, daß die Weichmacher (Ad) und (Bd) unter semialiphatischen Ölen, Polyisobutylenen von sehr geringem Molekulargewicht und aromatischen, naphthenischen oder paraffinischen Petrolölen, Alkylbenzolen, Estern von gesättigten organischen Säuren und Ethylen-Vinylacetat-Copolymeren von sehr geringem Molekulargewicht ausgewählt werden.

15. Verfahren nach einem der Ansprüche 1 bis 14, dadurch gekennzeichnet, daß der Aktivator (C) unter tertiären Aminen, Phosphinen, Aryl- oder Alkylphosphoniumhalogeniden und tertiären Amiden von Fettsäuren ausgewählt wird.

16. Verfahren nach einem der Ansprüche 1 bis 15, dadurch gekennzeichnet, daß das molare Verhältnis des Aktivators (C) zu den Anhydridgruppen des Polymers (Bb) mindestens gleich 1 ist.

17. Verfahren nach einem der Ansprüche 1 bis 16, dadurch gekennzeichnet, daß mindestens eine der Zusammensetzungen (A) und (B) bis zu 10 Gew.-Teile mindestens eines unter Wachsen und Paraffinen ausgewählten Zusatzstoffes je 100 Gew.-Teile der Zusammensetzung enthält.

18. Verfahren nach einem der Ansprüche 1 bis 17, dadurch gekennzeichnet, daß die Temperatur des Gemischs der Bestandteile jeder Zusammensetzung (A) und (B) mindestens 10 °C höher als der Erweichungspunkt der Zusammensetzung ist.

19. Verfahren nach einem der Ansprüche 1 bis 18, dadurch gekennzeichnet, daß die Temperatur der Zusammensetzung, der der Aktivator (C) zugesetzt wird, 120 bis 170 °C beträgt.

20. Verfahren nach einem der Ansprüche 1 bis 19, wobei das Zweikomponentensystem ferner einen Film eines Thermoplasten enthält, der chemisch gegen jede der beiden Zusammensetzungen inert ist und

auf jeder seiner Flächen eine Schicht eines dieser Bestandteile trägt, um einen Film mit drei Schichten zu bilden,

**dadurch gekennzeichnet,**

daß nach der Herstellung der beiden Bestandteile des Systems der eine auf eine Fläche des Films und der andere auf die andere Fläche aufgetragen werden.

**21.** Verfahren nach Anspruch 20,
gekennzeichnet durch
das Auftragen des Bestandteils auf eine Fläche des Films durch Coextrusion.

**22.** Verfahren nach Anspruch 20 oder 21,
gekennzeichnet durch
das Auftragen des Bestandteils auf eine Fläche des Films durch Beschichtung.

**23.** Verfahren zum Kleben zweier Objekte,
dadurch gekennzeichnet,
daß jeder der Bestandteile des nach dem Verfahren gemäß einem der Ansprüche 1 bis 19 hergestellten Systems auf 120 bis 220 °C erwärmt wird und dann:
- entweder sie bei dieser Temperatur intensiv vermischt werden, dann der sich hieraus ergebende Schmelzklebestoff auf mindestens eines der beiden zu klebenden Objekte aufgetragen wird und schließlich eines der zu klebenden Objekte auf das andere aufgebracht wird,
- oder die beiden Bestandteile getrennt, entweder einer nach dem anderen auf ein zu klebendes Objekt oder einer auf das eine und der andere auf das andere zu klebende Objekt aufgetragen werden und dann das eine auf das andere Objekt aufgebracht wird.

**24.** Klebeverfahren nach Anspruch 23,
dadurch gekennzeichnet,
daß nach Aufbringen des einen Objekts auf das andere das System ausreichend lange erhitzt wird, um die Vernetzung zu vollenden.

**25.** Verfahren zum Kleben zweier Objekte mit Hilfe eines nach dem Verfahren gemäß einem der Ansprüche 20 bis 22 hergestellten Systems,

**dadurch gekennzeichnet,**

daß die beiden Objekte mittels eines Films mit drei Schichten verbunden werden, dann das System auf eine Temperatur über dem Schmelzpunkt des inerten thermoplastischen Films erhitzt wird, die ausreicht, die Migration von einem der Bestandteile (Ab) und (Bb) zum anderen zuzulassen, wobei ihre Kontaktaufnahme die Vernetzung des Systems bewirkt.